# EUROPEAN PATENT SPECIFICATION

(11) **EP 2 857 606 B1**
(45) Date of publication and mention of the grant of the patent: **20.07.2016**
(21) Application number: 14187442.0
(22) Date of filing: 02.10.2014
(51) Int. Cl.: E04B 7/04, E04B 1/74, E04B 1/76

(54) **Energy efficient building**
Energiesparendes Gebäude
Bâtiment à faible consommation énergétique

(30) Priority: 02.10.2013 SE 1351165
(43) Date of publication of application: 08.04.2015
(73) Proprietor: E G Bygg AB, 288 21 Vinslöv (SE)
(72) Inventor: Gustavsson, Erik, 288 32 Vinslöv (SE); Lörup, Yngve, 283 41 Osby (SE)
(74) Representative: Awapatent AB

(56) References cited:
- CA-A1- 968 124
- DE-C1- 19 702 860
- FR-A1- 2 950 372
- JP-A- H09 217 456
- JP-A- 2000 328 708
- JP-A- 2001 032 432
- US-A- 3 668 828
- US-A1- 2005 210 827

## Description

### FIELD OF THE INVENTION

The present invention relates to an energy efficient building according to the independent claim.

### BACKGROUND OF THE INVENTION

There are various motivations to improve energy efficiency. Reducing energy use reduces energy costs and may result in financial cost savings to consumers. Reducing energy use is also seen as a partial solution to the problem of reducing emissions. Improved energy efficiency in buildings, industrial processes and transportation may reduce the world's energy needs significantly, and helps to control global emissions of greenhouse gases.

In the field of energy efficient buildings, also known as green buildings, new technologies are constantly being developed to complement current practices in creating greener structures. The common objective is that green buildings are designed to reduce the overall impact of the built environment, on human health, and the natural environment. One known way of creating greener structures is to reduce heat losses in buildings.

An example of an energy-efficient building is known from EP 2317021 A1. The invention disclosed in EP 2317021 A1 is mainly concerned with reduction of heat losses in buildings. For the achievement of this purpose, building structures are surrounded with continuous heat insulation and the wall structure consists of two separated structures, an inner wall structure and outer wall structure with heat insulation in-between. The inner wall structure - and the outer wall structure are load-bearing structures, and the building is provided with forced ventilation. Introduction of the invention may limit the need for heating energy of an energy-efficient building up to 40 kWh/m2.

A further example is known from EP1317587 B1, which discloses a building, comprising sheets of wooden material with the external walls, internal walls, floor and/or roof boards each made of wooden sheets and of a double- or multi-skinned form, thus comprising at least one inner sheet and at least one outer sheet which are separated by spacer elements and connected to each other by the same. Cavities are provided between the sheets. The sheets forming the inner walls, the outer walls, the floor or roof boards are, at least in one direction, in one piece throughout.

In WO9735079 A a building structure is disclosed which is formed from a plurality of prefabricated wall panels and a plurality of prefabricated floor slabs, a lower wall panel being shown interconnected with an outer floor slab and mounted on a support beam of an arrangement forming part of the building foundation constructed on site. The wall panel has a precast concrete component and a layer of rigid insulation bonded to one face thereof over a liquid impermeable flexible membrane which extends to such a height as to define a suitable damp proof course. The building method eliminates many of the steps currently performed on site in adverse conditions and enables those steps to be carried out in a controlled factory environment.

Buildings according to the preamble of claim 1 are known from the documents JP 2001 032432 A and DE 197 02860 C for instance; while roof-deck insulation techniques are disclosed in JP 2000328708.

The inventors of the present invention have identified a need for an improved energy-effective building which is less expensive, easy and straightforward to manufacture and which provides reduced over all heat losses and quick installation on site.

Thus, an object of the present invention is to provide a building which provides reduced heat losses.

A further object is to provide an alternative way of providing an energy-effective building and which building further provides an energy efficient building procedure.

### SUMMARY OF THE INVENTION

The above-mentioned objects are achieved by the present invention according to the independent claim 1.

Preferred embodiments are set forth in the dependent claims.

According to the present invention defined in claim 1, the energy efficient building, for minimizing cold bridges transferring heat in said building, has at least a pair of opposing gable end walls and a pair of opposing side walls extending between said gable end walls. The building comprises an inner wall structure and an outer wall structure being separated from each other with a layer of wall heat insulation, and a roof structure, adapted to support an outer covering layer. The roof structure comprises a plurality of longitudinal rafters, a plurality of transverse rafters, and a layer of roof heat insulation, said longitudinal rafters extending between said gable end walls and said transverse rafters extending between said side walls, said plurality of longitudinal rafters and said plurality of transverse rafters being arranged to rest on said outer wall structure. The layer of roof heat insulation is arranged to meet said layer of wall heat insulation such that said insulation runs continuously from said wall structures into said roof structure.

In other words, the energy efficient building, or building structure, is constructed such that cold bridges transferring heat from the inner parts of the building to the outer parts, or to the exterior of the building, are reduced. This is achieved by a roof structure comprising longitudinal rafters and transverse rafters. The transverse rafters support e.g. the outer covering layer of the roof, and by reducing the area wherein the transverse rafters abut against more central rafters in the building, i.e. the longitudinal rafters (being arranged to extend through more central parts of the building structure) the cold bridges, i.e. the parts of the roof structure transferring heat from the inner parts to the outer parts of the building structure, are reduced. Thereby energy efficiency is improved. Energy efficiency of the building, or building structure, is further improved by that the layer of roof heat insulation is arranged to meet said layer of wall heat insulation such that said insulation runs continuously from said wall structures into said roof structure.

The present invention is partially based on the insight that by separating the outer parts of the building, i.e. the gable end walls and the side walls and the transverse rafters supporting the outer covering layer of the roof, to the greatest possible extent from the inner parts of the building structure, i.e. the longitudinal rafters and the inner wall structure, heat losses from the building structure are reduced. Thereby the cold bridges in said building, or building structure, are reduced. The roof structure comprises transverse rafters and longitudinal rafters, which reduces the contact surfaces in the roof structure between more outer parts and more inner parts.

In one embodiment, said layer of wall heat insulation and said layer of roof heat insulation have essentially the same thickness, and said layers of insulation are arranged such that they meet in their whole thickness. This is advantageous in that heat losses from the building structure, are reduced, because there are no interruptions in the insulation where heat may leak out from the building. Thus, heat losses in the transition section between the walls and the roof structure are prevented or reduced

In one embodiment, said layers of insulation meet along a transition section between said wall structures and said roof structure along said gable walls and said side walls.

According to the invention, at said gable end walls, said plurality of longitudinal rafters are mounted to said gable end walls such that an gable end space is provided between each lateral end face of each longitudinal rafter and said gable end wall. The space prevents the longitudinal rafters from being in contact with the gable end walls. The space thereby insulates and prevents heat from being transferred from the inner side of the building structure to the outer parts of the building structure, e.g. to the gable end walls and then to the exterior, via the longitudinal rafters. In other words, the layer of wall insulation, the gable end space and said layer of roof insulation forms a continuous layer of insulation at said gable end walls and in said building.

In one embodiment, the gable end walls of said outer wall structure comprises a supporting surface extending at least partly along an inner side of said outer wall structure, wherein said plurality of longitudinal rafters are supported by said supporting surface. The supporting surface is preferably arranged at a distance D1 from the upper edge of the gable end walls. The supporting surface protrudes from the inner side of the gable en walls and said longitudinal rafters rests on said supporting surface.

In one embodiment, at said gable end walls, the gable end space is arranged between said supporting surface and said longitudinal rafters. Preferably, the longitudinal rafters are mounted at said supporting surface such that a gable end space is provided between said longitudinal rafters and the supporting surface. The longitudinal rafters may be attached to the supporting surface, by means of a fastening device, which is configured such that said gable end space is provided between the longitudinal rafter and the supporting surface, when the longitudinal rafter is attached to the supporting surface. The gable end space prevents that a cold bridge is formed between the rafter and the gable end wall.

In one embodiment, the gable end space is arranged between said gable end wall and a short end of each one of said longitudinal rafters. The gable end space prevents that a cold bridge is formed between the short end of the longitudinal rafter and the gable end wall.

In one embodiment, the plurality of transverse rafters are arranged above said plurality of longitudinal rafters, closest to said outer covering layer. Thus, the transverse rafters support the outer covering layer.

In one embodiment, the plurality of transverse rafters are arranged in a transverse direction with respect to said plurality of longitudinal rafters, such that said plurality of transverse rafters and said plurality of longitudinal rafters intersects in a number of intersection points. The transverse rafters are adapted to distribute loads essentially in a transverse direction and the longitudinal rafters are adapted to distribute loads essentially in a longitudinal direction.

In one embodiment, the transverse rafter which is arranged closest to the outer wall structure is arranged a distance D2 from the outer wall structure. It is advantageous that the outer wall structure is not in abutment with the transverse rafter closest to the outer wall structure, as this would lead to energy losses. In this way, it is avoided that a cold bridge occurs between the outer wall structure and the transverse rafter. It is advantageous that the outer wall structure, which preferably is made of concrete, is not in abutment with the transverse rafter, which preferably is made of wood. The distance D2 is preferably between 100 and 150 mm.

In one embodiment, the plurality of transverse rafters are arranged to abut against said plurality of longitudinal rafters in said intersection points between said longitudinal and transverse rafters. In this embodiment, the longitudinal rafters and transverse rafters being in abutment with each other in the intersection points, provides contact surfaces between the rafters only in the intersection points. Thus, this embodiment provides minimized contact surfaces between said rafters, and thus provides improved energy efficiency, i.e. reduced heat losses; compared to traditional roof structures.

In one embodiment, the outer wall structure comprises a number of prefabricated outer wall elements, adapted to form said outer wall structure. The outer wall structure comprising prefabricated elements provides for quick installation on site, which provides an energy efficient building procedure.

In one embodiment, the transverse rafters are arranged to rest on one or more of said prefabricated outer wall element(s) of said outer wall structure.

Thus, the prefabricated outer wall element(s) takes up loads and distributes loads from the transverse rafters.

In one embodiment, the inner wall structure comprises a number of prefabricated inner wall elements, adapted to form said inner wall structure. The inner wall structure comprising prefabricated elements provides for quick installation on site, which provides an energy efficient building procedure.

In one embodiment, the plurality of longitudinal rafters are partly arranged to rest on said inner wall structure. The longitudinal rafters stabilize the inner wall structure at the same time as the inner wall structure supports the longitudinal rafters.

In one embodiment, the supporting surface is sloping in at least a first direction. Thereby, a roof inclination is achieved, such that the outer covering layer of the roof is inclined. The supporting surface may be sloping in a first and a second direction, such that a ridged roof is achieved.

In one embodiment, the number of prefabricated outer wall elements of said outer wall structure is approximately 12-20 dependent on the size of the building.

In one embodiment, the building, or building structure, is further provided with a layer of floor heat insulation, which is arranged to meet the wall heat insulation, preferably, in their whole thickness. Thereby, the insulation also runs continuously in the floor structure, which provides for reduced heat losses in the building. The insulation essentially encloses the building structure.

The invention will now be described in detail with reference to the drawings.

### SHORT DESCRIPTION OF THE APPENDED DRAWINGS

Figure 1 shows parts of the energy efficient building, for minimizing cold bridges transferring heat in said building, according to one embodiment of the present invention.
Figure 2a shows a cross sectional view of an energy efficient building having one floor, according to one embodiment of the present invention.
Figure 2b shows a cross sectional view of an energy efficient building having two floors, according to one embodiment of the present invention.
Figure 3 shows a plurality of longitudinal rafters resting on a supporting surface of a gable end wall of the energy efficient building, according to one embodiment of the present invention.
Figure 4 shows a plurality of longitudinal rafters resting on a supporting surface of a gable end wall and one of the transverse rafters resting on one of the side walls of the energy efficient building, according to one embodiment of the present invention.
Figure 5 shows parts of a roof structure and an inner wall structure, of a building according to one embodiment of the present invention.

### DETAILED DESCRIPTION OF THE EMBODIMENTS OF THE INVENTION

Throughout the application the word "above" refers to the part located furthest away with respect to the ground or soil, and the word "under" or "bellow" refers to the part located closest in respect of the ground or soil.

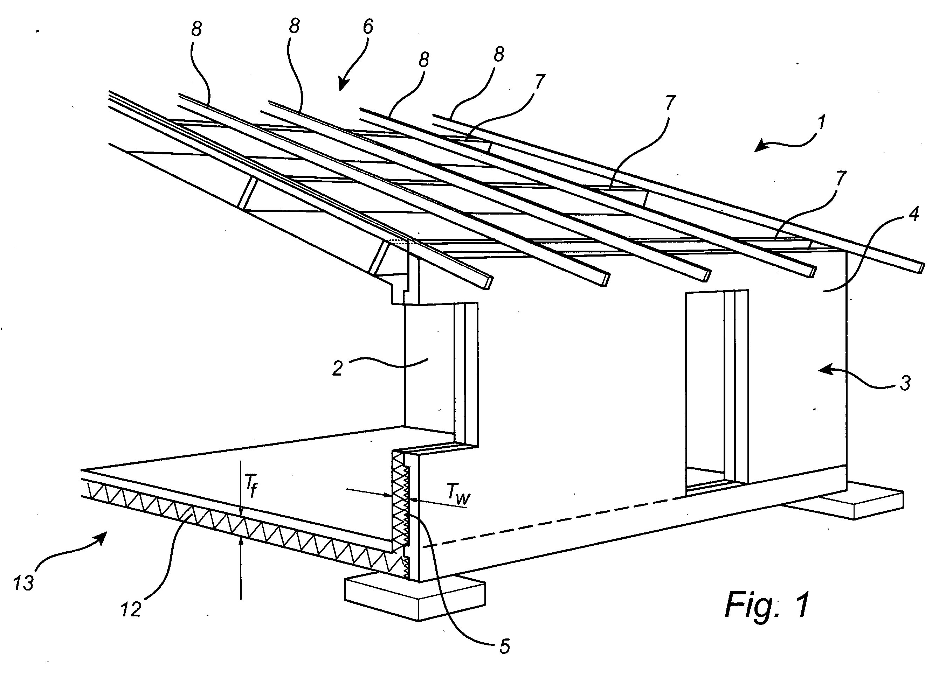

Figure 1 shows parts of the energy efficient building 1, for minimizing cold bridges transferring heat in the building 1, according to one embodiment of the present invention. The energy efficient building 1 has at least a pair of opposing gable end walls 2 and a pair of opposing side walls 3 extending between the gable end walls 2. The building 1 comprises an inner wall structure 9 (not shown in Figure 1) and an outer wall structure 4 being separated from each other with a layer of wall heat insulation 5. The building 1, or building structure, further comprises a roof structure 6, adapted to support an outer covering layer 10 (not shown in Figure 1). The roof structure 6 comprises a plurality of longitudinal rafters 7, a plurality of transverse rafters 8, and a layer of roof heat insulation 11 (not shown in Figure 1). The longitudinal rafters 7 extend between the gable end walls 2 and the transverse rafters 8 extend between the side walls 3. The plurality of longitudinal rafters 7 and the plurality of transverse rafters 8 are arranged to rest on the outer wall structure 4, and the layer of roof heat insulation 11 is arranged to meet the layer of wall heat insulation 5 such that the insulation 5, 11 runs continuously from the wall structures 4, 9 into the roof structure 6. The building, or building structure, is further provided with a layer of floor heat insulation 12, which is arranged to meet the wall heat insulation 5 along a transition section between the wall structures 4, 9 and the floor structure 13, preferably in their whole thickness Tw, Tf. Thus, the insulation runs continuously also in the floor structure 13, such that the insulation 5, 11, 12 encloses essentially the complete building 1, which provides for reduced heat losses in the building 1. The present invention may limit the need for heating energy of an energy-efficient building by 35 %.

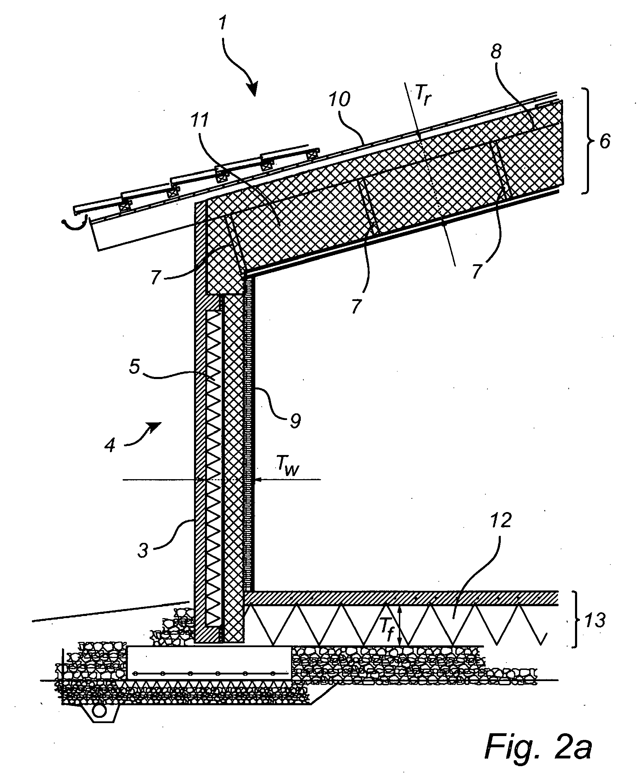

Figure 2a shows a cross sectional view of an energy efficient building 1 having one floor, according to one embodiment of the present invention. The building 1 comprises an inner wall structure 9 and an outer wall structure 4 being separated from each other with a layer of wall heat insulation 5. The building 1 further comprises a roof structure 6, adapted to support an outer covering layer 10. The roof structure 6 comprises a plurality of longitudinal rafters 7, a plurality of transverse rafters 8, and a layer of roof heat insulation 11. The longitudinal rafters 7 extend between the gable end walls 2 and the transverse rafters 8 extend between the side walls 3. The plurality of longitudinal rafters 7 and the plurality of transverse rafters 8 are arranged to rest on the outer wall structure 4, and the layer of roof heat insulation 11 is arranged to meet the layer of wall heat insulation 5 such that the insulation 5, 11 runs continuously from the wall structures 4, 9 into the roof structure 6.

The building is further provided with a layer of floor heat insulation 12, which is arranged to meet the wall heat insulation 5 along a transition section between the wall structures 4, 9 and the floor structure 13, preferably in their whole thickness Tw, Tf. Thus, the insulation runs continuously also in the floor structure 13, such that the insulation 5, 11, 12 encloses essentially the complete building 1. The layer of wall heat insulation 5 and the layer of roof heat insulation 11 may have essentially the same thickness Tw, Tr and the layers of insulation 5, 11 are preferably arranged such that they meet in their whole thickness Tw, Tr. The layers of insulation 5, 11 meet along a transition section between the wall structures 4, 9 and the roof structure 6 along the gable walls 2 and the side walls 3. The thickness of the insulation layers Tw, Tr, Tf is preferably between 300 and 900 mm. Tw is preferably approximately 365 mm, Tr approximately 600 to 620 mm, and Tf approximately 300 mm. The energy efficient building 1 achieves an average U-value of approximately 0.12 to 0.13 W/m2K. The U-value depends not only on the design of walls, roof and floor construction, but also on the number of doors and windows in the building, as well as the size of these and the U-value for the doors and windows used in each specific case.

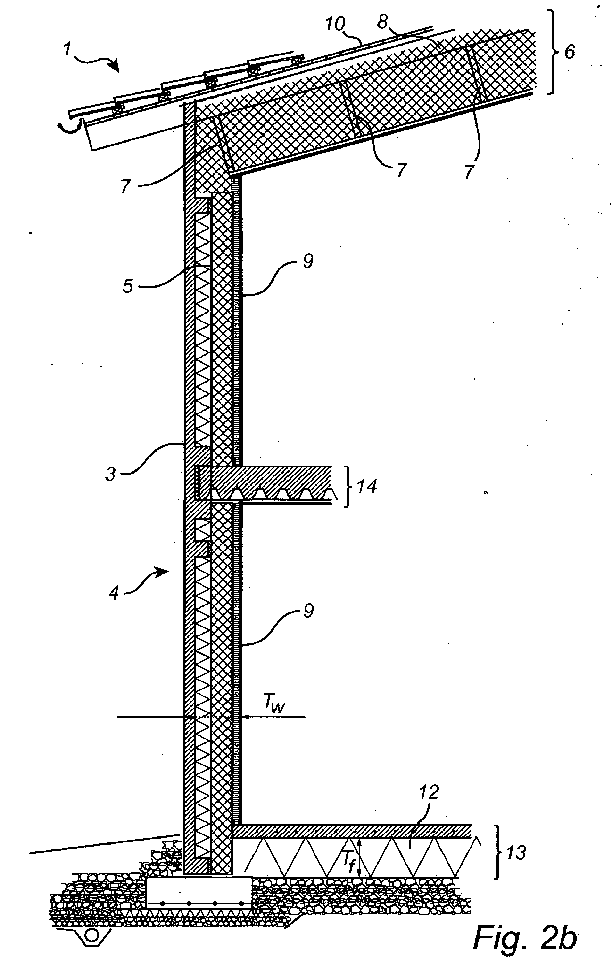

Figure 2b shows a cross sectional view of an energy efficient building 1 having two floors, according to one embodiment of the present invention. The floor structure of the second floor 14 is mounted in the outer wall structure 4.

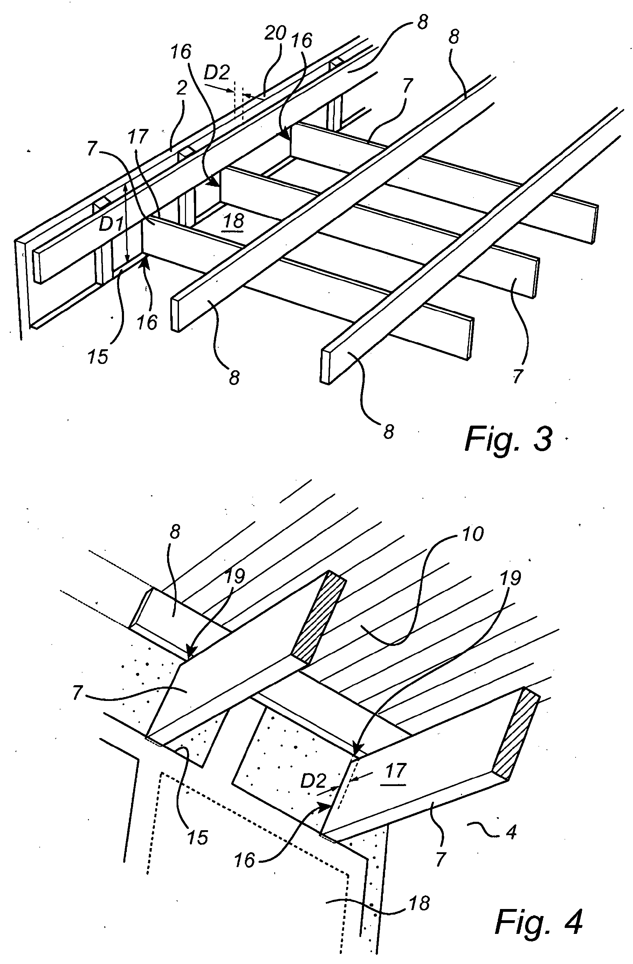

Figure 3 shows a plurality of longitudinal rafters 7 resting on a supporting surface 15 of a gable end wall 2 of the energy efficient building 1, according to one embodiment of the present invention. The plurality of longitudinal rafters 7 are mounted to the gable end walls 2 such that a gable end space 16 is provided between each lateral end face of each longitudinal rafter 7 and the gable end wall 2. The layer of wall insulation 5, the gable end space 16 and the layer of roof insulation 11 then forms a continuous layer of insulation at the gable end walls 2 and in the building 1.

As illustrated in Figure 3, the gable end walls 2 of the outer wall structure 4 comprises a supporting surface 15 extending at least partly along an inner side 18 of the outer wall structure 4, wherein the plurality of longitudinal rafters 7 are supported by the supporting surface 15. The supporting surface is 15 is preferably arranged at a distance D1 from the upper edge 20 of the gable end walls 2. The supporting surface 15 protrudes from the inner side 18 of the gable end walls 2 and said longitudinal rafters 7 rests on said supporting surface 15, at the protrusion. Thus, the longitudinal rafters 7 are mounted to the gable end walls 2 and rests on the supporting surface 15. A gable-end space 16 is arranged to extend between the supporting surface 15 and the longitudinal rafters 7. The gable end space 16 is approximately between 20 and 30 mm. The gable end space 16 is arranged between the gable end wall 2 and a short end 17 of each one of the longitudinal rafters 7. As further seen in Figure 3, the supporting surface 15 is sloping in a first and a second direction, such that a ridged roof is achieved. However, the supporting surface 15 may be sloping in only a first direction, wherein a lean to roof is achieved. The distance D1 is preferably 660 mm. Furthermore, the transverse rafter 8, which is arranged closest to the outer wall structure 4, is arranged a distance D2 from the outer wall structure. The distance D2 is preferably between 100 and 150 mm.

Figure 4 shows a plurality of longitudinal rafters 7 resting on a supporting surface 15 of a gable end wall 2 and one of the transverse rafters 8 resting on one of the side walls 3 of the energy efficient building 1, according to one embodiment of the present invention. As illustrated in Figure 4, the plurality of transverse rafters 8 are arranged above the plurality of longitudinal rafters 7, closest to the outer covering layer 10. The plurality of transverse rafters 8 are arranged in a transverse direction with respect to the plurality of longitudinal rafters 7, such that the plurality of transverse rafters 8 and the plurality of longitudinal rafters 7 intersect in a number of intersection points 19. The transverse rafters 8 are arranged a distance D2 above the longitudinal rafters 7, such that there, in each intersection point 19, is an intersection point space between the longitudinal and the transverse rafters 7, 8. This is advantageous, as it increases the strength of the roof structure. Furthermore, the transverse rafter 8, which is arranged closest to the outer wall structure 4, is arranged a distance D2 from the outer wall structure.

In one embodiment, the outer wall structure 4 comprises a number of prefabricated outer wall elements, adapted to form the outer wall structure 4. The transverse rafters 8 may then be arranged to rest on one or more of the prefabricated outer wall element(s) of the outer wall structure 4. The number of prefabricated outer wall elements of the outer wall structure may be approximately 12 to 20. The prefabricated outer wall elements are preferably made from concrete.

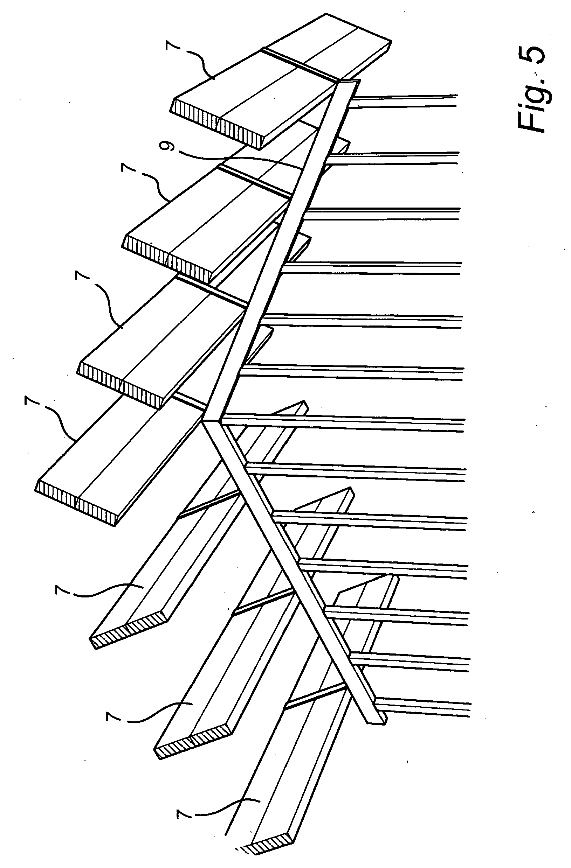

Figure 5 shows parts of a roof structure 6 and an inner wall structure 9, of a building according to one embodiment of the present invention. In one embodiment, the inner wall structure 9 comprises a number of prefabricated inner wall elements, adapted to form the inner wall structure 9. The prefabricated inner wall elements are then preferably made from concrete. However, the inner wall structure 9 may be, or may be partly, made from wood, as illustrated in Figure 5. As seen in Figure 5, the plurality of longitudinal rafters 7 are partly arranged to rest on the inner wall structure 9.

The present invention is not limited to the above-described preferred embodiments but is defined by the appending claims. Various alternatives, modifications and equivalents may be used within the scope defined by the claims.

## Claims

1. Energy efficient building (1), for minimizing cold bridges transferring heat in said building, said building (1) having at least a pair of opposing gable end walls (2) and a pair of opposing side walls (3) extending between said gable end walls (2), said building (1) comprising:
- an inner wall structure (9) and an outer wall structure (4) being separated from each other with a layer of wall heat insulation (5);
- a roof structure (6), adapted to support an outer covering layer (10),
said roof structure (6) comprising a plurality of longitudinal rafters (7), a plurality of transverse rafters (8), and a layer of roof heat insulation (11), said longitudinal rafters (7) extending between said gable end walls (2) and said transverse rafters (8) extending between said side walls (3), said plurality of longitudinal rafters (7) and said plurality of transverse rafters (8) being arranged to rest on said outer wall structure (4), and wherein said layer of roof heat insulation (11) is arranged to meet said layer of wall heat insulation (5) such that said insulation runs continuously from said wall structures (4, 9) into said roof structure (6), wherein the building is **characterized in that** at said gable end walls (2), said plurality of longitudinal rafters (7) are mounted to said gable end walls (2) such that a gable end space (16) is provided between each lateral end face of each longitudinal rafter (7) and said gable end wall (2).

2. Energy efficient building according to claim 1, wherein said layer of wall heat insulation (5) and said layer of roof heat insulation (11) have essentially the same thickness (Tw, Tr) and that said layers of insulation (5, 11) are arranged such that they meet in their whole thickness (Tw, Tr).

3. Energy efficient building according to claim 2, wherein said layers of insulation (5,11) meet along a transition section between said wall structures (4, 9) and said roof structure (6) along said gable walls (2) and said side walls (3).

4. Energy efficient building according to any of the preceding claims, wherein said gable end walls (2) of said outer wall structure (4) comprises a supporting surface (15) extending at least partly along an inner side (18) of said outer wall structure (4), wherein said plurality of longitudinal rafters (7) are supported by said supporting surface (15).

5. Energy efficient building according to claim 4, wherein said gable end space (16) is arranged between said supporting surface (15) and said longitudinal rafters (7).

6. Energy efficient building according to any of the preceding claims, wherein said gable end space (16) is arranged between said gable end wall (2) and a short end (17) of each one of said longitudinal rafters (7).

7. Energy efficient building according to any of claims 1-6, wherein said plurality of transverse rafters (8) are arranged above said plurality of longitudinal rafters (7), closest to said outer covering layer (10).

8. Energy efficient building according to any of claims 1-7, wherein said plurality of transverse rafters (8) are arranged in a transverse direction with respect to said plurality of longitudinal rafters (7), such that said plurality of transverse rafters (8) and said plurality of longitudinal rafters (7) intersects in a number of intersection points (19).

9. Energy efficient building according claim 8, wherein said transverse rafters (8) are arranged to abut against said plurality of longitudinal rafters (7) in said intersection points (19) between said longitudinal and transverse rafters (7, 8).

10. Energy efficient building according to any of claims 1-9, wherein said outer wall structure (4) comprises a number of prefabricated outer wall elements, adapted to form said outer wall structure (4).

11. Energy efficient building according to claim 10, wherein said transverse rafters (8) are arranged to rest on one or more of said prefabricated outer wall elements of said outer wall structure (4).

12. Energy efficient building according to any of claims 1-11, wherein the transverse rafter (8) which is arranged closest to the outer wall structure (4) is arranged a distance D2 from the outer wall structure

13. Energy efficient building according to any of claims 1-12, wherein said inner wall structure (9) comprises a number of prefabricated inner wall elements, adapted to form said inner wall structure (9).

14. Energy efficient building according to any of claims 1-13, wherein said plurality of longitudinal rafters (7) is partly arranged to rest on said inner wall structure (9).

15. Energy efficient building according to any of claims 4 or 5, wherein said supporting surface (15) is sloping in at least a first direction.

16. Energy efficient building according to any of claims 10-11, wherein said number of prefabricated outer wall elements of said outer wall structure (4) is between 12 and 20.

## Patentansprüche

1. Energiesparendes Gebäude (1) zur Minimierung von Kältebrücken, die Wärme in dem Gebäude übertragen, wobei das Gebäude (1) mindestens ein Paar von sich gegenüberliegenden Giebelendwänden (2) und ein Paar von sich gegenüberliegenden Seitenwänden (3), die sich zwischen den Giebelendwänden (2) erstrecken, umfasst, wobei das Gebäude (1) Folgendes aufweist:
- eine Innenwandstruktur (9) und eine Außenwandstruktur (4), die durch eine Schicht von Wandwärmedämmung (5) voneinander getrennt sind;
- eine Dachstruktur (6), die dazu geeignet ist, eine äußere Deckschicht (10) zu tragen, wobei die Dachstruktur (6) mehrere Längssparren (7), mehrere Quersparren (8) sowie eine Schicht von Dachwärmedämmung (11) aufweist, wobei sich die Längssparren (7) zwischen den Giebelendwänden (2) und sich die Quersparren (8) zwischen den Seitenwänden (3) erstrecken, wobei die mehreren Längssparren (7) und die mehreren Quersparren (8) derart angeordnet sind, dass sie auf der Außenwandstruktur (4) ruhen, und wobei die Schicht von Dachwärmedämmung (11) derart angeordnet ist, dass sie so auf die Schicht von Wandwärmedämmung (5) trifft, dass sich die Dämmung kontinuierlich von den Wandstrukturen (4, 9) in die Dachstruktur (6) erstreckt, wobei das Gebäude **dadurch gekennzeichnet ist, dass** an den Giebelendwänden (2) die mehreren Längssparren (7) derart an den Giebelendwänden (2) angebracht sind, dass zwischen jeder seitlichen Endfläche eines jeden Längssparren (7) und der Giebelendwand (2) ein Giebelendraum (16) vorgesehen ist.

2. Energiesparendes Gebäude nach Anspruch 1, wobei die Schicht von Wandwärmedämmung (5) und die Schicht von Dachwärmedämmung (11) im Wesentlichen die gleiche Dicke (Tw, Tr) aufweisen und dass die Dämmschichten (5, 11) so angeordnet sind, dass sie mit ihrer gesamten Dicke (Tw, Tr) aufeinandertreffen.

3. Energiesparendes Gebäude nach Anspruch 2, wobei die Dämmschichten (5, 11) entlang eines Übergangsabschnitts zwischen den Wandstrukturen (4, 9) und der Dachstruktur (6) entlang der Giebelwände (2) und der Seitenwände (3) aufeinandertreffen.

4. Energiesparendes Gebäude nach einem der vorstehenden Ansprüche, wobei die Giebelendwände (2) der Außenwandstruktur (4) eine Stützfläche (15) aufweisen, die sich zumindest teilweise entlang einer Innenseite (18) der Außenwandstruktur (4) erstreckt, wobei die mehreren Längssparren (7) von der Stützfläche (15) gestützt werden.

5. Energiesparendes Gebäude nach Anspruch 4, wobei der Giebelendraum (16) zwischen der Stützfläche (15) und den Längssparren (7) angeordnet ist.

6. Energiesparendes Gebäude nach einem der vorstehenden Ansprüche, wobei der Giebelendraum (16) zwischen der Giebelendwand (2) und einem kurzen Ende (17) von jedem der Längssparren (7) angeordnet ist.

7. Energiesparendes Gebäude nach einem der Ansprüche 1 bis 6, wobei die mehreren Quersparren (8) über den mehreren Längssparren (7) am nächsten an der äußeren Deckschicht (10) angeordnet sind.

8. Energiesparendes Gebäude nach einem der Ansprüche 1 bis 7, wobei die mehreren Quersparren (8) in einer Querrichtung in Bezug auf die mehreren Längssparren (7) angeordnet sind, so dass sich die mehreren Quersparren (8) und die mehreren Längssparren (7) an einer Anzahl von Schnittpunkten (19) schneiden.

9. Energiesparendes Gebäude nach Anspruch 8, wobei die Quersparren (8) derart angeordnet sind, dass sie an den Schnittpunkten (19) zwischen den Längssparren und den Quersparren (7, 8) an den mehreren Längssparren (7) anliegen.

10. Energiesparendes Gebäude nach einem der Ansprüche 1 bis 9, wobei die Außenwandstruktur (4) eine Anzahl von vorgefertigten Außenwandelementen aufweist, die dazu geeignet sind, die Außenwandstruktur (4) zu bilden.

11. Energiesparendes Gebäude nach Anspruch 10, wobei die Quersparren (8) so angeordnet sind, dass sie auf einem oder mehreren der vorgefertigten Außenwandelemente der Außenwandstruktur (4) ruhen.

12. Energiesparendes Gebäude nach einem der Ansprüche 1 bis 11, wobei der Quersparren (8), der der Außenwandstruktur (4) am nächsten angeordnet ist, in einem Abstand D2 von der Außenwandstruktur angeordnet ist.

13. Energiesparendes Gebäude nach einem der Ansprüche 1 bis 12, wobei die Innenwandstruktur (9) eine Anzahl von vorgefertigten Innenwandelementen aufweist, die dazu geeignet sind, die Innenwandstruktur (9) zu bilden.

14. Energiesparendes Gebäude nach einem der Ansprüche 1 bis 13, wobei die mehreren Längssparren (7) teilweise so angeordnet sind, dass sie auf der Innenwandstruktur (9) ruhen.

15. Energiesparendes Gebäude nach einem der Ansprüche 4 oder 5, wobei die Stützfläche (15) in wenigstens nach eine erste Richtung abfallend ist.

16. Energiesparendes Gebäude nach einem der Ansprüche 10 bis 11, wobei die Anzahl von vorgefertigten Außenwandelementen der Außenwandstruktur (4) zwischen 12 und 20 liegt.

## Revendications

1. Bâtiment éco-énergétique (1) pour minimiser les ponts thermiques de transfert de chaleur dans ledit bâtiment, ledit bâtiment (1) ayant au moins une paire de murs de pignon opposés (2) et une paire de murs latéraux opposés (3) s'étendant entre lesdits murs de pignon (2), ledit bâtiment (1) comprenant :
- une structure de mur intérieur (9) et une structure de mur extérieur (4) qui sont séparées l'une de l'autre par un revêtement d'isolation thermique murale (5) ;
- une structure de toit (6) conçue pour supporter un revêtement de couverture extérieur (10), ladite structure de toit (6) comprenant une pluralité de chevrons longitudinaux (7), une pluralité de chevrons transversaux (8), et un revêtement d'isolation thermique du toit (11), lesdits chevrons longitudinaux (7) s'étendant entre lesdits murs de pignon (2) et lesdits chevrons transversaux (8) s'étendant entre lesdits murs latéraux (3), ladite pluralité de chevrons longitudinaux (7) et ladite pluralité de chevrons transversaux (8) étant disposés de sorte à reposer sur ladite structure de mur extérieur (4) et dans lequel ledit revêtement d'isolation thermique du toit (11) est disposé de sorte à se joindre audit revêtement d'isolation thermique murale (5) de telle sorte que ladite isolation s'étende de façon continue depuis lesdites structures de mur (4, 9) dans ladite structure de toit (6), le bâtiment étant **caractérisé en ce qu'**au niveau desdits murs de pignon (2), ladite pluralité de chevrons longitudinaux (7) sont montés par rapport auxdits murs de pignon (2) de telle sorte qu'un espace de pignon (16) soit ménagé entre chaque face d'extrémité latérale de chaque chevron longitudinal (7) et ledit mur de pignon (2).

2. Bâtiment éco-énergétique selon la revendication 1, dans lequel ledit revêtement d'isolation thermique murale (5) et ledit revêtement d'isolation thermique du toit (11) ont essentiellement la même épaisseur (Tw, Tr) et lesdits revêtements d'isolation (5, 11) sont disposés de telle sorte qu'ils se joignent selon toute leur épaisseur (Tw, Tr).

3. Bâtiment éco-énergétique selon la revendication 2, dans lequel lesdits revêtements d'isolation (5, 11) se joignent le long d'une section de transition entre lesdites structures de mur (4, 9) et ladite structure de toit (6) le long desdits murs de pignon (2) et desdits murs latéraux (3).

4. Bâtiment éco-énergétique selon l'une quelconque des revendications précédentes, dans lequel lesdits murs de pignon (2) de ladite structure de mur extérieur (4) comprennent une surface de support (15) s'étendant au moins en partie le long d'un côté intérieur (18) de ladite structure de mur extérieur (4), dans lequel ladite pluralité de chevrons longitudinaux (7) étant supportés par ladite surface de support (15).

5. Bâtiment éco-énergétique selon la revendication 4, dans lequel ledit espace de pignon (16) est ménagé entre ladite surface de support (15) et lesdits chevrons longitudinaux (7).

6. Bâtiment éco-énergétique selon l'une quelconque des revendications précédentes, dans lequel ledit espace de pignon (16) est ménagé entre ledit mur de pignon (2) et une courte extrémité (17) de chacun desdits chevrons longitudinaux (7).

7. Bâtiment éco-énergétique selon l'une quelconque des revendications 1 à 6, dans lequel ladite pluralité de chevrons transversaux (8) sont disposés au-dessus de ladite pluralité de chevrons longitudinaux (7), au plus près dudit revêtement de couverture extérieur (10).

8. Bâtiment éco-énergétique selon l'une quelconque des revendications 1 à 7, dans lequel ladite pluralité de chevrons transversaux (8) sont disposés dans une direction transversale par rapport à ladite pluralité de chevrons longitudinaux (7), de telle sorte que ladite pluralité de chevrons transversaux (8) et ladite pluralité de chevrons longitudinaux (7) se croisent en un certain nombre de points d'intersection (19).

9. Bâtiment éco-énergétique selon la revendication 8, dans lequel lesdits chevrons transversaux (8) sont disposés de sorte à être en butée contre ladite pluralité de chevrons longitudinaux (7) dans lesdits points d'intersection (19) entre lesdits chevrons longitudinaux et transversaux (7, 8).

10. Bâtiment éco-énergétique selon l'une quelconque des revendications 1 à 9, dans lequel ladite structure de mur extérieur (4) comprend un certain nombre d'éléments de mur extérieur préfabriqués, conçus pour former ladite structure de mur extérieur (4).

11. Bâtiment éco-énergétique selon la revendication 10, dans lequel lesdits chevrons transversaux (8) sont disposés de sorte à reposer sur un ou plusieurs desdits éléments de mur extérieur préfabriqués de ladite structure de mur extérieur (4).

12. Bâtiment éco-énergétique selon l'une quelconque des revendications 1 à 11, dans lequel le chevron transversal (8) qui est disposé au plus près de la structure de mur extérieur (4) est disposé à une distance D2 de la structure de mur extérieur.

13. Bâtiment éco-énergétique selon l'une quelconque des revendications 1 à 12, dans lequel ladite structure de mur intérieur (9) comprend un certain nombre d'éléments de mur intérieur préfabriqués, conçus pour former ladite structure de mur intérieur (9).

14. Bâtiment éco-énergétique selon l'une quelconque des revendications 1 à 13, dans lequel ladite pluralité de chevrons longitudinaux (7) sont en partie disposés de sorte à reposer sur ladite structure de mur intérieur (9).

15. Bâtiment éco-énergétique selon l'une quelconque des revendications 4 et 5, dans lequel ladite surface de support (15) est en pente dans au moins une première direction.

16. Bâtiment éco-énergétique selon l'une quelconque des revendications 10 à 11, dans lequel ledit nombre d'éléments de mur extérieur préfabriqués de ladite structure de mur extérieur (4) est compris entre 12 et 20.
